# EUROPEAN PATENT SPECIFICATION

(11) **EP 0 885 770 B1**
(45) Date of publication and mention of the grant of the patent: **04.09.2002**
(21) Application number: 98201629.7
(22) Date of filing: 20.05.1998
(51) Int. Cl.: B60P 1/44

(54) **Vertically movable loading platform provided with railings, for mounting to a vehicle**
Vertikal bewegbare Plattform mit Geländer, zur Montage auf einem Fahrzeug
Plate-forme à déplacement vertical équipé avec garde-corps, pour montage sur un véhicule

(30) Priority: 23.05.1997 BE 9700453
(43) Date of publication of application: 23.12.1998
(73) Proprietor: DHOLLANDIA, naamloze vennootschap, 9160 Lokeren (BE)
(72) Inventor: Nuyts, Henri, 2300 Turnhout (BE)
(74) Representative: Donné, Eddy

(56) References cited:
- FR-A- 2 659 607
- GB-A- 2 135 959
- US-A- 4 214 849
- US-A- 5 449 031

## Description

The invention relates to a vertically movable loading platform, provided with railings, for mounting to a vehicle, as described in the preamble of claim 1.

It is common practice, that the rear railing, limiting the loading platform at its rear side, is able to pivot like a door. Possibly, said railing is executed in two parts so that the parts per se will not become too wide and can easily be pivoted into the open position.

Nevertheless, it is a disadvantage that the railing parts can get in the way when they are pivoted inwards and require some space around the loading platform when they are pivoted outwards.

The object of the invention is to remove these difficulties and to that end provides for that the measures as described in the characterizing portion of claim 1 are applied.

In this way, it is achieved that the rear railing in its opened position takes up little space and thus does not, or only slightly, hinder free access to the loading plat-form. With the use of a single pivot axis, the rod can be brought into a horizontal position in such a way that it is almost in the plane of a side railing.

According to an elaboration of the invention, the pivot element can be provided with an opening in which the rod is slidable.

Further, the pivot element per se can be pivotably connected to the side rail, in such a way that it is pivotable around an axis being substantially horizontal and square to the plane of the side railing, as seen in the operating position of the loading platform.

Generally, the rod can be laid upon the upper beam or an intermediate beam of the side rail, so that it will take up as little space as possible in the openend position of the rear railing. When the rod will come to lie on the upper beam of the side railing, then the rod will be breast-high when the rear railing is in its closed position. In the other case, the rod will be knee-high. Obviously both a 5 brest-high railing and a knee-high railing can be provided.

In both cases, it can be provided for, that the rod and the side rail can be brought into the transport position together.

In particular, the rod can be composed of at least two telescopic parts. This facilitates bringing the rod into transport position and further it will take up less space during transport. This will be particularly important with a relatively wide loading platform, thus a relatively great length of the rod.

Further, it can be provided for that, in the tilted-down position of said two side railings, at least a part of the rod of the rear railing connects said side railings for locking them to each other.

The invention is further explained by way of an embodiment shown in the drawing, in which:
fig. 1 schematically shows a perspective view of a loading lift mounted to a vehicle, the loading platform of it being provided with side railings and a rear railing which is in its closed position;
Fig. 2 schematically shows a view according to fig. 1 but with the rear railing in its opened postion;
Fig. 3 schematically shows a plan view of the connection means between the rear railing and a side railing;
Fig. 4 shows a view according to fig. 1 but with one side railing in the tilted-down position; and
Fig. 5 shows a view according to fig. 4 but with both side railings in the tilted-down position and being locked in said position.

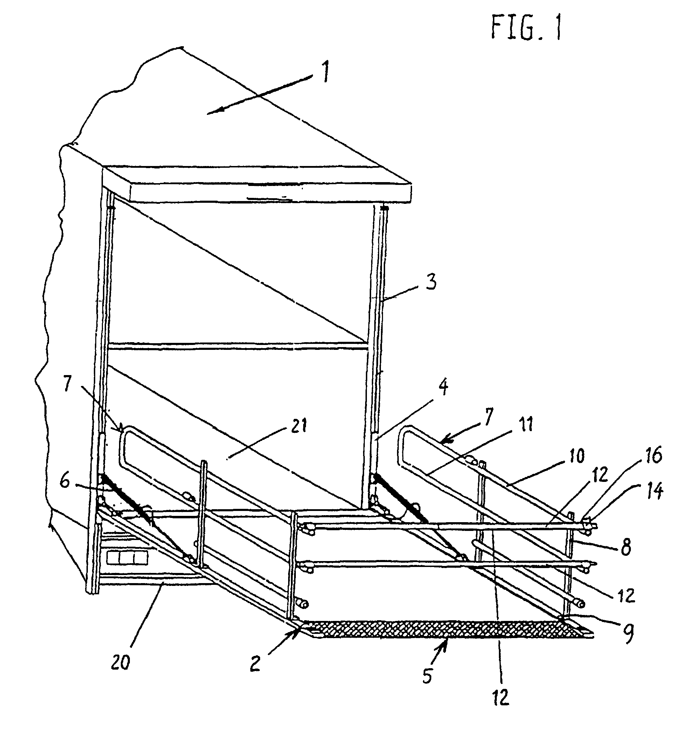

The figures 1, 2, 4 and 5 of the drawing each show a part of a vehicle 1 provided with a loading lift 2 comprising the guides 3 along which the sliders 4 are movable up and down by means not further indicated. The loading platform 5 is pivotably connected to the sliders 4. By means of the pressurized medium cylinders 6, the loading platform 5 can be brought into the vertical position when it is out of 5 operation and the vehicle 1 is to be moved.

The loading platform 5 is provided with two side railings 7, their vertical legs 8 being connected to the loading platform 5 by pivots 9 so that they can be folded-down when the vehicle 1 should start moving. In the vertical position, the side railings 7 can be blocked by means not further indicated. Further, the side railings 7 each may comprise an upper beam 10 and an intermediate beam 11, which together can be U-shaped. Further, not indicated, beams can be provided too.

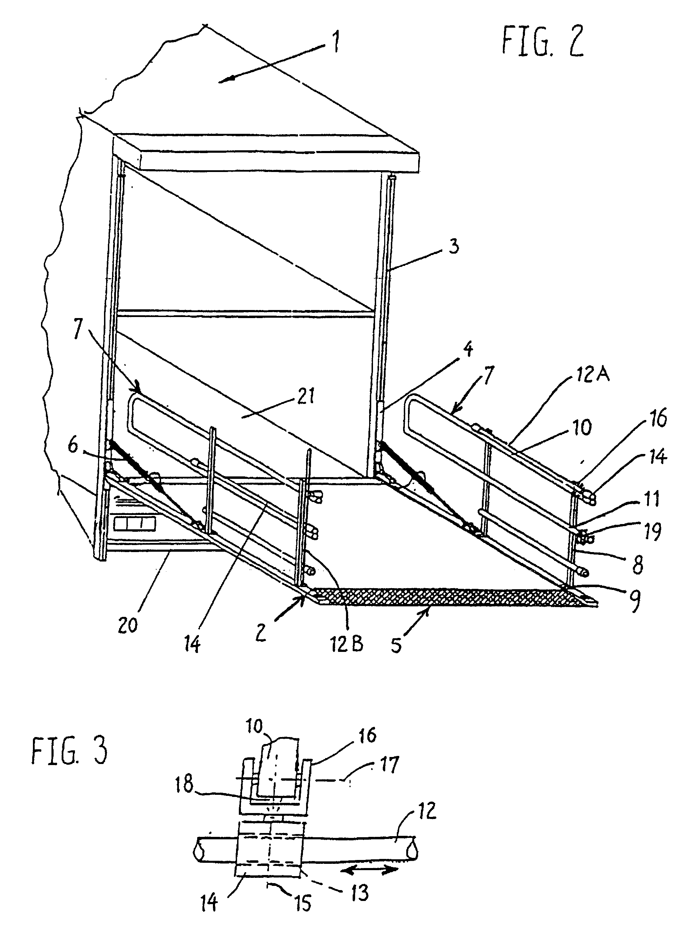

To the one side railing 7 the rear railing 12 is connected, said rear railing being in the form of at least one rod, pipe or profile. As appears in particular from fig. 3, the rod 12 is movably mounted in an opening 13 in a pivot element 14 pivotable around the shaft 15 in relation to a yoke 16. The yoke 16 is in turn connected to the side railing 7, namely to its upper or intermediate beam 10 and 11, respectively, in such away that it is pivotable around the axis 17. The downward stroke of the yoke 16 is limited by a stop 18 connected to the beam.

In this way, it is achieved that the rod 12 can take up the position 12A as shown in fig. 2, in which the rod 12 bears on the upper beam 10 and can be secured to it by a snapping system not illustrated, for example.

It is also possible to connect a rod to the side railing 7 in such a way that it is possible to bring the rod 12 into the vertical position as indicated in fig. 2 by 12B. The rod 12 will be provided with stops not shown for preventing it from being pulled out of the opening 13.

Further, in the way shown in fig. 1, the rod 12 may comprise two telescopically slidable parts. Then no difficulties arise when the rod in its operating position should be longer than the width of the loading platform as seen in the longitudinal direction of the vehicle.

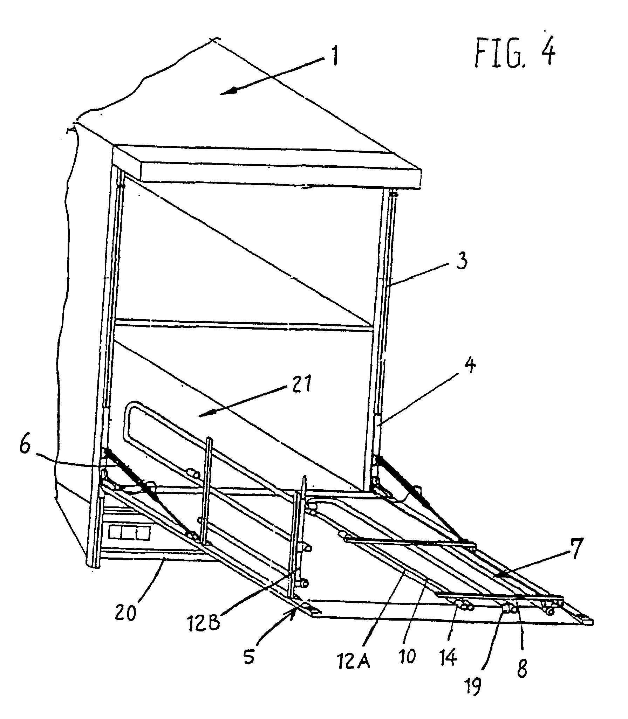

In fig. 4 one of the side railings 7 is brought into the folded-down position, a rod 12 of the rear railing being 5 in the position indicated by 12A in which it is lying upon the upper beam 10 of said side railing. A second rod 12, connected to the other side raling 7 is brought into the position as indicated by 12B, in which it is running paralled to the vertical leg 8 of said side railing.

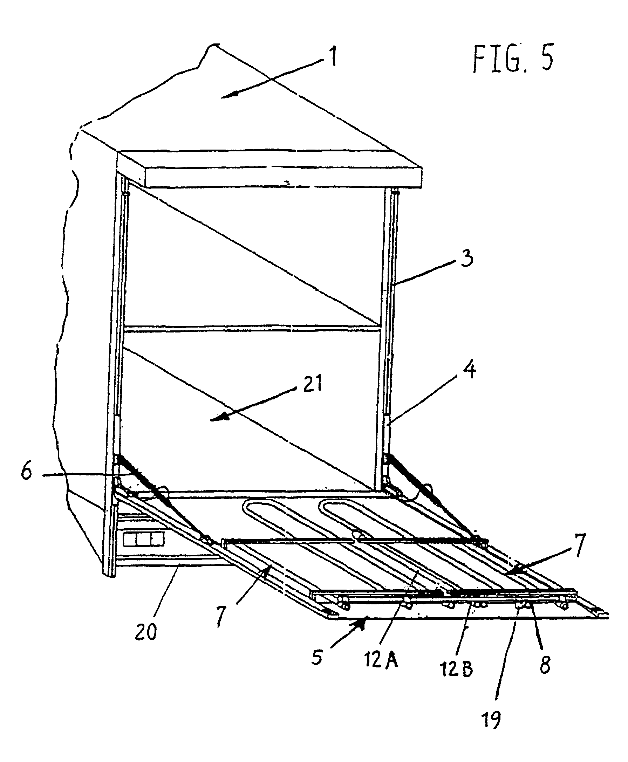

In fig. 5 also the other side railing 7 is in its folded down position. The second rod 12, connected to it, now is brought into a bushing 19 connected to the intermediate beam 11 of the side railing 7, as shown in fig. 2. In this way both side railings 7 are connected to each other and locked by using the rod 12 either a part thereof being telescopically slidable in the other part. Obviously it is not necessary that each side railing 7 is provided with a rod 12.

The figures 1 and 2 are showing the platform 5 in a position in which it is at a certain distance over the bumper 20 and at the level of the bottom 21 of the loading tray of the vehicle 1.

It will be obvious, that only one single possible embodiment of a loading platform provided with railings according to the invention is illustrated in the drawings and that many changes can be made without being beyond the inventive idea, as defined by the claims.

## Claims

1. Vertically movable loading platform (5) provided with railings (7, 12), for mounting to a vehicle, said railings comprising two foldable, or foldable and removable 5 side railings (7) and a rear railing (12) pivotably connected to a side railing, in which said rear railing can be opened for providing access to the loading platform, **characterized in that** the rear railing (12) comprises at least one rod in the form of a pipe or profile, said rod being connected to a side railing (7) by means of a pivot element (14), in such a way that it is pivotable around at least one axis (15), said axis in operating position of the loading platform (5) extending in vertical direction and parallel to the plane of the side railing (7), the rod (12) and the pivot element (14) being executed such, that the rod is longitudinally movable in relation to the pivot element and that, in the closed position of said rear railing, the rod (12) is able to extend horizontally between the two side railings (7) and on opening it is slidable in relation to said pivot element (14).

2. Loading platform according to claim 1, **characterized in that** the pivot element (14) is provided with an opening (13) through which the rod (12) is slidable.

3. Loading platform according to claim 1, **characterized in that** the pivot element (14) is pivotably connected to the side railing (7) by means of a yoke (16) in such a way that it is pivotable around an axis (17) being substantially horizontal and square to the plane of the side railing (7) as seen in the operating position of the loading platform (5).

4. Loading platform according to one of the preceding claims, **characterized in that** the rod (12) can be brought into the transport position together with the side railing (17).

5. Loading platform according to one of the preceding claims, **characterized in that** the rod (12) is composed of at least two telescopic parts.

6. Loading platform according to claim 5, **characterized in that** in the tilted-down position of the two side railings (7) at least a part of the rod (12) of the rear railing connects said side railings to each other for locking them.

## Patentansprüche

1. Mit Geländern (7,12) versehene vertikal bewegbare Ladeplattform (5) zur Montage an einem Fahrzeug, wobei besagte Geländer zwei zusammenklappbare, oder zusammenklappbare und abnehmbare Seitengeländer (7) und ein schwenkbar mit einem Seitengeländer verbundenes rückwärtiges Geländer (12) umfassen, worin besagtes rückwärtiges Geländer geöffnet werden kann, um Zugang zur Ladeplattform zu gewähren, **dadurch gekennzeichnet, dass** das rückwärtige Geländer (12) mindestens eine Stange in Form eines Rohrs oder Profils umfasst, wobei besagte Stange mittels eines Schwenkelements (14) mit einem Seitengeländer (7) verbunden ist, derart, dass es um zumindest eine Achse (15) schwenkbar ist, wobei sich besagte Achse in Betriebsposition der Ladeplattform (5) in vertikaler Richtung und parallel zur Ebene des Seitengeländers (7) erstreckt, wobei die Stange (12) und das Schwenkelement (14) derart ausgeführt sind, dass die Stange in Bezug zu dem Schwenkelement in Längsrichtung bewegt werden kann und dass in geschlossener Position besagten rückwärtigen Geländers die Stange (12) sich horizontal zwischen den beiden Seitengeländern (7) erstrecken kann und bei dessen Öffnen in Bezug zu besagtem Schwenkelement (14) verschiebbar ist.

2. Ladeplattform gemäß Anspruch 1, **dadurch gekennzeichnet, dass** das Schwenkelement (14) mit einer Öffnung (13) versehen ist, durch die die Stange (12) verschiebbar ist.

3. Ladeplattform gemäß Anspruch 1, **dadurch gekennzeichnet, dass** das Schwenkelement (14) mittels eines Jochs (16) derart schwenkbar mit dem Seitengeländer (7) verbunden ist, dass es um eine im wesentlichen horizontal und senkrecht zur Ebene des Seitengeländers (7) befindliche Achse (17) geschwenkt werden kann, gesehen in der Betriebsposition der Ladeplattform (5).

4. Ladeplattform gemäß einem der vorgenannten Ansprüche, **dadurch gekennzeichnet, dass** die Stange (12) zusammen mit dem Seitengeländer (7) in die Transportposition gebracht werden kann.

5. Ladeplattform gemäß einem der vorgenannten Ansprüche, **dadurch gekennzeichnet, dass** die Stange (12) aus mindestens zwei teleskopartig ausschiebbaren Teilen zusammengesetzt ist.

6. Ladeplattform gemäß Anspruch 5, **dadurch gekennzeichnet, dass** in der nach heruntergeklappten Position der beiden Seitengeländer (7) mindestens ein Teil der Stange (12) des rückwärtigen Geländers besagte Seitengeländer miteinander verbindet, um sie zu verriegeln.

## Revendications

1. Plate-forme de chargement (5) mobile en direction verticale, équipée de garde-corps (7, 12), montée sur un véhicule, lesdits garde-corps comprenant deux garde-corps latéraux repliables ou repliables et amovibles (7) et un garde-corps arrière (12) relié en pivotement à un garde-corps latéral, dans lequel ledit garde-corps arrière peut être ouvert pour avoir accès à la plate-forme de chargement, **caractérisée en ce que** le garde-corps arrière (12) comprend au moins une barre sous la forme d'un tube ou d'un profilé, ladite barre étant reliée à un garde-corps latéral (7) à l'aide d'un élément pivotant (14), de telle sorte qu'elle est à même de pivoter autour d'au moins un axe (15), ledit axe, dans la position de travail de la plate-forme de chargement (5) s'étendant en direction verticale parallèlement au plan du garde-corps latéral (7), la barre (12) et l'élément pivotant (14) étant réalisés de telle sorte que la barre est mobile en direction longitudinale par rapport à l'élément pivotant et de telle sorte que, dans la position fermée dudit garde-corps arrière, la barre (12) est à même de s'étendre en direction horizontale entre les deux garde-corps latéraux (7), tandis que, lors de l'ouverture, elle est à même de coulisser par rapport audit élément de pivotement (14).

2. Plate-forme de chargement selon la revendication 1, **caractérisée en ce que** l'élément pivotant (14) est muni d'une ouverture (13) à travers laquelle la barre (12) est à même de coulisser.

3. Plate-forme de chargement selon la revendication 1, **caractérisée en ce que** l'élément pivotant (14) est relié en pivotement au garde-corps latéral (7) à l'aide d'un étrier (16) de telle sorte qu'il est à même de pivoter autour d'un axe (17) essentiellement horizontal et formant un angle droit par rapport au plan du garde-corps latéral (7), lorsqu'on regarde dans la position de travail de la plate-forme de chargement (5).

4. Plate-forme de chargement selon l'une quelconque des revendications précédentes, **caractérisée en ce que** la barre (12) peut être amenée dans la position de transport de manière conjointe avec le garde-corps (17).

5. Plate-forme de chargement selon l'une quelconque des revendications précédentes, **caractérisé en ce que** la barre (12) est composée d'au moins deux parties télescopiques.

6. Plate-forme de chargement selon la revendication 5, **caractérisée en ce que**, dans la position dans laquelle les deux garde-corps latéraux (7) ont basculé vers le bas, au moins une partie de la barre (12) du garde-corps arrière relie lesdits garde-corps latéraux l'un à l'autre afin de les verrouiller.
